# EUROPÄISCHE PATENTSCHRIFT

(11) **EP 1 335 041 B1**
(45) Veröffentlichungstag und Bekanntmachung des Hinweises auf die Patenterteilung: **12.08.2009**
(21) Anmeldenummer: 03000645.6
(22) Anmeldetag: 16.01.2003
(51) Int. Cl.: C23F 11/06, C01D 1/42

(54) **Verfahren zum Schutz von metallischen Werkstoffen in stark alkalischem Medium**
Process for inhibiting corrosion of metallic materials in highly alkaline media
Procédé d'inhibition de corrosion des métaux dans les conditions fortements alcalines

(30) Priorität: 29.01.2002 DE 10203329
(43) Veröffentlichungstag der Anmeldung: 13.08.2003
(73) Patentinhaber: LANXESS Deutschland GmbH, 51369 Leverkusen (DE)
(72) Erfinder: Heuer, Lutz, Dr., 41542 Dormagen (DE); Savakis, Stylianos, Dr., 51069 Köln (DE); Diekamnn, Helmut, Dr., 51399 Burscheid (DE); Zierngiebl, Eberhard, Dr., 51061 Köln (DE)

(56) Entgegenhaltungen:
- EP-A- 0 565 371
- GB-A- 1 111 749
- US-A- 3 962 113
- US-A- 4 282 178
- US-A- 4 289 645
- PATENT ABSTRACTS OF JAPAN vol. 012, no. 387 (C-536), 14. Oktober 1988 (1988-10-14) & JP 63 130785 A (SUMITOMO METAL IND LTD), 2. Juni 1988 (1988-06-02)

## Beschreibung

Die Erfindung betrifft ein Korrosionsschutzverfahren und die Verwendung von Korrosionsschutzmittel zum Schutz von metallischen Werkstoffen in stark alkalischem Medium.

Es ist bekannt, dass metallische Werkstoffe in Abhängigkeit von Temperatur, Druck und Zusammensetzung sowohl von sauren als auch von alkalischen Medien korrosiv angegriffen werden. Um in chemischen Anlagen oder anderen Orts einen sicheren Betrieb sicherstellen zu können, werden deswegen die sogenannten Korrosionsraten in Laborversuchen bestimmt und später durch Messungen an der im Betrieb befindlichen Anlage durch Kontrollmessungen überprüft. Erfahrungswerte setzen hierbei die Grenzen für die Einschätzung, ob der Bau einer Anlage aus dem metallischen Werkstoff noch sinnvoll erscheint, bzw. wie das Wartungsintervall zu setzen ist.

Bei extremen Bedingungen, wie erhöhten Temperaturen ab 50°C und/oder konzentrierten sauren oder alkalischen Medien mit pH >13, ist die Suche nach einem geeigneten metallischen Werkstoff nicht leicht. Sind bei sauren Medien dann oft innenbeschichtete Werkstoffe (Email) im Einsatz, ist dieses bei alkalischen Medien nicht möglich, da Email von Alkali ebenfalls korrosiv angegriffen wird. Während der Lebensdauer einer Anlage führt dies zu kostenaufwendigen Wartungen oder zur Stilllegung der Anlage.

Natronlauge kann durch verschiedene Verfahren hergestellt werden, die unterschiedliche Konzentrationen in wässriger Lösung oder Schmelzen liefern. Beispiele davon sind die Diaphragma-, Membran-, und Amalgamverfahren. Vergleichbares gilt für die Herstellung von Kalilauge oder anderen stark alkalischen Lösungen von Alkali- oder Erdalkaliehydroxiden. Ist die Konzentration der wässrigen Natronlauge verfahrensgemäß zu gering, wird diese durch Eindampfung angehoben. Die Konzentrationen an NaOH im Membranverfahren liegt bei ca. 30 %. Die handelsübliche NaOH-Konzentration liegt jedoch bei ca. 50 %.

Die Eindampfung von NaOH-Lösungen von 30 % auf höhere Konzentrationen ist daher notwendig. Für diesen, bei hohen Temperaturen laufenden Prozess gibt es nur wenige metallische Materialien, die mit erträglicher Beschädigung diese Eindampfung gefahrlos sicherstellen können. Hier sind z. B. nichtrostende Stähle oder auch andere Edelstähle zu nennen. Enthält die Natronlauge jedoch prozessbedingt Anteile von Chlorat oder andere Oxidationsmittel wie z. B. Sauerstoff oder Fe³⁺ im ppm Bereich, wird die Korrosion erheblich größer und der Betrieb einer Eindampfungsanlage wird schwieriger und teurer. Dieses trifft zu für Anlagen, die mit Membran- oder gar Diaphragmalauge betrieben werden sollen. Erstere enthält bis zu 50 ppm Chlorat, letztere bis zu 5000 ppm. Eine Eindampfanlage ist dann aufgrund der erhöhten Korrosion nicht mehr wirtschaftlich betreibbar oder kann, da der Prozess temperaturabhängig ist, nur Konzentrationen bis ca. 50 % liefern. Des weiteren führt die Korrosion zur Kontamination der Natronlauge mit Metallionen, meist Nickel, Mangan, Chrom o. ä., jeweils in Abhängigkeit des eingesetzten metallischen Werkstoffs der Anlage. Diese Verunreinigungen können dann nachfolgende chemische oder andere Prozesse stören oder unterbinden. In fast allen Fällen werden diese Ionen früher oder später in die Umwelt entlassen, welches nicht wünschenswert ist.

US-A-4 282 178 offenbart die Verwendung von Hydrazin oder Hydrazinderivaten zum Schutz von metallischen Werkstoffen in stark alkalischen Medium.

Der Erfindung lag die Aufgabe zugrunde, ein Verfahren bereitzustellen, welches die Korrosion von metallischen Werkstoffen durch stark alkalischen Medien, insbesondere Natronlauge-haltigen Medien, erheblich reduziert.

Die Erfindung verwendet ein Korrosionsschutzmittel, das ein Amin enthält, worin das Amin mindestens eine am Stickstoff gebundene CH-Gruppe enthält oder ein Salz davon. Nicht abschließende Beispiele sind Propylenamine und Benzylamine wie Benzylamin, Dibenzylamin, Tribenzylamin, Methylbenzylamin der Formel (I) 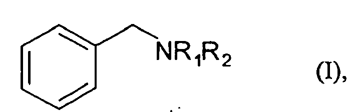 worin
- R₁: für einen C₁-C₆ Alkylrest, H, oder ein Benzylrest und
- R₂: für einen C₁-C₆ Alkylrest, H, oder ein Benzylrest steht
worin die Benzylreste gegebenenfalls weitere Substituenten enthalten können, insbesondere C₁-C₆ Alkyl oder ein Halogen wie z.B. Chlor.

Bevorzugt werden Polyaminen eingesetzt, ausgewählt aus der Gruppe der Reaktionsprodukte von Dichlorethan mit Ammoniak und/oder anderen Aminen oder aus der Gruppe der Reaktionsprodukte aus Ethylenoxid mit Ammoniak oder anderen Aminen. Diese Produkte sind in der Regel wasserlösliche/wassermischbare Flüssigkeiten oder feste Hydrate.

Besonders bevorzugt werden Polyamine eingesetzt, die durch ihre Wasserdampfflüchtigkeit während des Eindampfungsprozesses dem Stoffstrom wieder entzogen werden oder die eine so geringe Wasserdampfflüchtigkeit besitzen, dass sie nicht oder nur in sehr kleinen Konzentrationen im Kondensat der Eindampfung zu finden sind. Unter Polyamine werden solche Verbindungen verstanden, die aus einer gesättigten Kohlenwasserstoff-Kette mit endständigen Amin-Funktionen, unterbrochen von einer wechselnden Anzahl sekundärer und/oder tertiärer und/oder quartärer Amino-Funktionen bestehen.

Ganz besonders bevorzugt sind Polyamine, in denen das Polyamin einer der folgenden Formeln (II) oder (III) entspricht

Hₚ-N(CH₂-CH₂)_{q}-[NHᵣ-(CH₂-CH₂)ₛ]ₙ-NHₜ (II),

NH₂-CH₂-CH₂-CH₂-[NHᵣ-(CH₂-CH₂-CH₂)ₛ]ₙ-NH₂ (III),

worin
- n: für 0 oder eine ganze Zahl von 1 bis 300,
- p, q, s und t: für 1 und 2, und
- r: für 0 und 1 steht,
wobei die Summe der Substituenten am jeweiligen Stickstoff drei ergibt oder
wobei zusätzlich zum Ladungsausgleich ein Anion An vorhanden ist, wenn der Stickstoff 4-fach gebunden vorliegt. Bevorzugte Anionen sind insbesondere Chlorid, Sulfat oder Nitrat.

Die Polyamine können neutral oder ionisch vorliegen, insbesondere durch quartären Stickstoff (vierfach substituierten Stickstoff). Gegenionen sind dann Chlorid, Sulfat, Nitrat oder andere Anionen. Sie können auch durch weitere Reagenzien vernetzt oder verzweigt werden, z. B. durch Folgereaktionen mit Dichlorethan, Ethylenimin oder Acrylnitril, gegebenenfalls mit nachfolgender Reduktion.

Weiterhin sind stickstoffhaltige Heterocyclen bevorzugt, insbesondere Piperazin oder Derivate davon, insbesondere der Formel (IV) 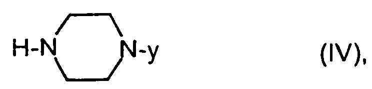 worin y für H, oder ein Aminoalkylrest, insbesondere Aminoethyl steht.

Bevorzugte Stoffe sind ferner die folgenden Stoffe der allgemeinen Formel (V) und (VI):

NH₂-CH₂-CH₂-[NH-CH₂-CH₂]ₙ-NH₂ (V),

NH₂-CH₂-CH₂-CH₂-[NH-CH₂-CH₂-CH₂]ₙ-NH₂ (VI),

wo "n" für 0 oder eine ganze Zahl von 1 bis 300 steht.

Ganz besonders bevorzugt sind:

| **Trivialname** | **Handelsname** |
|---|---|
| EDA | Ethylendiamin |
| DETA | Diethylentriamin |
| TETA | Triethylentetramin |
| TEPA | Tetraethylenpentamin |
| PEHA | Pentaethylenhexamin |
| HEHA | Hexaethylenheptamin |

oder höhere Amingemische, welche als Rückstand der Herstellung der obengenannten Substanzen, insbesondere PEHA oder HEHA oder TEPA, bei der Destillation verbleiben.

Die oben genannten Stoffe sind in Bezug auf ihre chemische Zusammensetzung zumeist auch als Handelsprodukt Gemische von bis zu einigen Hundert Einzelkomponenten, unterschieden durch ihr Siedeverhalten. Bevorzugt werden EDA und PEHA eingesetzt, ganz besonders bevorzugt PEHA.

Die Erfindung betrifft ferner ein Verfahren zum Schutz von metallischen Werkstoffen in stark alkalischem Medium (d.h pH > 13) mit einem Korrosionsschutzmittel das ein Amin bzw. ein Polyamin enthält. Die dafür geeigneten Amine und Polyamine wurden oben erwähnt.

Um die Korrosion alkalischer Medien an metallischen Werkstoffen zu unterbinden oder drastisch zu senken, werden 0,001 ppm bis 200.000 ppm eines Amins dem alkalischen Medium beigegeben. Die Zufuhr findet bei Temperaturen von 0 bis 500°C und Drucken von -1 bis +1000 bar statt. Bevorzugt wird eine Zugabe von 0,1 ppm bis 1000 ppm eines Amins, unter Drucken von -1 bis +15 bar, und unter Temperaturen von 50 bis 300°C. Das Aliquot Amin und der alkalische Stoffstrom werden nötigenfalls vermischt.

Die Zugabe des Amins erfolgt kontinuierlich oder diskontinuierlich, die Verfahren werden diskontinuierlich oder kontinuierlich betrieben. Besonders bevorzugt ist die Zugabe des Amins zu einer Natronlauge mit einer Konzentration in wässriger Lösung von 5 bis 95 Gew.-%, insbesondere von 30 bis 90 Gew.-%, und mit pH Werten >13.

Dem Korrosionsschutzmittel können alle in der Literatur beschriebenen Korrosionsschutzmittel generell zugefügt werden, wenn sie keine Oxidationsmittel enthalten oder mit dem oben genannten Mittel reagieren, um die Wirkung des Korrosionsschutzes zu verbessern. Insbesondere Stoffe mit reduzierenden Eigenschaften können die Wirkung des Korrosionsschutzmittels verbessern.

Die Erfindung wird erläutert, jedoch nicht beschränkt durch die folgenden auf Untersuchungen basierenden Beispiele, in denen Prozentangaben Gewichtsprozente (Gew.-%) bedeuten.

### Beispiele

### Versuchsanordnung

Zum Nachweis der korrosionshemmenden Wirkung wurden Untersuchungen in Versuchsgefäßen aus Silber durchgeführt. Die Metallproben waren durch PTFE-Halterungen gegeneinander und gegen das Versuchsgefäß isoliert. Untersucht wurde das Korrosionsverhalten verschiedener Metalle und Legierungen in hochkonzentrierten ClO₃^{―}-freien NaOH-Lösungen, in ClO₃^{―}-haltigen NaOH-Lösungen und in ClO₃^{―} und aminhaltigen NaOH-Lösungen. Bei den Untersuchungen, in denen der Einfluss von Zusätzen auf das Korrosionsverhalten der eingesetzten Werkstoffe ermittelt werden sollte, wurde der Gehalt der Lösung an diesen Zusätzen analytisch überwacht und durch entsprechende Zugaben auf das Anfangsniveau über die gesamte Versuchsdauer von 14 Tagen gehalten. Bestimmt wurde die Abtragungsrate bei der Abtragung der Oberfläche des metallischen Werkstoffs in mm pro annum (mm/a).

### Beispiel 1

Nachfolgende Untersuchungsergebnisse wurden in siedenden 80 %-igen NaOH-Lösungen (ca. 220°C) ohne und mit Zusätzen von Chlorat (als Natriumchlorat) und Amin aufgeführt. In diesen Untersuchungen wurden geschweißte Proben aus Nickel (W.-Nr. 2.4068) und Inconel 600 (W.-Nr. 2.4816) eingesetzt.

| Untersuchung | Werkstoff | Prüfmedium | Abtragungsrate (mm/a) |
|---|---|---|---|
| 1. | Nickel | 80 %ige NaOH | 0,10 |
| | | | |
| 2. | Inconel 600 | 80 %ige NaOH | 0,10 |
| | | | |
| 3. | Nickel | 80 %ige NaOH | 0,40 |
| | | + 25 ppm ClO₃⁻ | |
| | | | |
| 4. | Inconel 600 | 80 %ige NaOH | 0,50 |
| | | + 25 ppm ClO₃⁻ | |
| | | | |
| 5. | Nickel | 80 %ige NaOH | 0,03 |
| | | + 25 ppm ClO₃⁻ | |
| | | +300 ppm PEHA | |
| | | | |
| 6. | Inconel 600 | 80 %ige NaOH | 0,03 |
| | | + 25 ppm ClO₃⁻ | |
| | | +300 ppm PEHA | |

Die Ergebnisse zeigen, dass der Zusatz des PEHA in der ClO₃⁻-haltigen Natronlauge eine Verringerung der Abtragungsraten um mehr als eine Zehnerpotenz bewirkt, und dass sogar um 2/3 niedrigere Abtragungsraten als in der ClO₃⁻-freien Natronlauge gemessen werden.

### Beispiel 2

Nachfolgende Korrosionsuntersuchungen wurden in 80 %iger NaOH-Schmelze (ca. 220°C) mit Zusatz von 25 ppm Chlorat als NaClO₃, mit zusätzlicher Nachdosierung und analytischer Kontrolle des Chloratgehaltes, Stickstoff überlagert, durchgeführt.

Ziel der Untersuchungen war die Abhängigkeit der Abtragungsraten von Nickel (W.-Nr. 2.4068) von der PEHA-konzentration festzustellen. In diesen Untersuchungen wurden geschweißte Proben aus Nickel (W.-Nr. 2.4068) eingesetzt.

| Untersuchung | Werkstoff | Prüfmedium | Abtragungsrate (mm/a) |
|---|---|---|---|
| 7. | Nickel | 80 %ige NaOH | 0,40 |
| | | +25 ppm ClO₃⁻ | |
| | | | |
| 8. | Nickel | 80 %ige NaOH | 0,11 |
| | | +25 ppm ClO₃⁻ | |
| | | +20 ppm PEHA | |
| | | | |
| 9. | Nickel | 80 %ige NaOH | 0,05 |
| | | +25 ppm ClO₃⁻ | |
| | | +50 ppm PEHA | |
| | | | |
| 10. | Nickel | 80 %ige NaOH | 0,03 |
| | | +25 ppm ClO₃⁻ | |
| | | +300 ppm PEHA | |

Die Ergebnisse zeigen, dass der Zusatz von 300 ppm PEHA in der ClO₃⁻-haltigen Natronlauge eine Verringerung der Abtragungsraten um mehr als eine Zehnerpotenz bewirkt, und dass sogar der Zusatz von nur 20 ppm PEHA in der ClO₃⁻-haltigen Natronlauge eine Verringerung der Abtragungsraten um fast ¾ bewirkt.

### Beispiel 3

Nachfolgende Korrosionsuntersuchungen wurden in 80 %iger NaOH-Schmelze (ca. 220°C) mit Zusatz von 25 ppm Chlorat als NaClO₃, und 300 ppm Ethylendiamin, Stickstoff überlagert, in einem PTFE-ausgekleideten Hochdruckautoklaven durchgeführt.

| Untersuchung | Werkstoff | Prüfmedium | Abtragungsrate (mm/a) |
|---|---|---|---|
| 11. | Nickel | 80 %ige NaOH | 0,04 |
| | | +25 ppm ClO₃⁻ | |
| | | + 300ppm Ethylendiamin | |

## Patentansprüche

1. Verfahren zum Schutz von metallischen Werkstoffen in stark alkalischem Medium mit einem Korrosionsschutzmittel, **dadurch gekennzeichnet, dass** das Korrosionssehutzmittel einem alkalischen Medium mit pH Werten >13 beigegeben wird und ein Amin enthält, wobei das Amin der folgenden Formel (I) entspricht 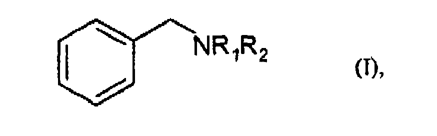 worin
R₁ für einen C₁-C₆ Alkylrest, H, oder einen Benzylrest und
R₂ für einen C₁-C₆ Alkylrest, H, oder einen Benzylrest steht,
und worin der Benzylrest gegebenenfalls weitere Substituenten enthalten kann,
oder das Amin ein Polyamin aus der Gruppe der Reaktionsprodukte von Dichlorethan mit Ammoniak und/oder anderen Aminen oder ein Polyamin aus der Gruppe der Reaktionsprodukte aus Ethylenoxid mit Ammoniak oder anderen Aminen ist
oder das Amin einer der folgenden Formeln (II) oder (III) entspricht:
Hₚ-N(CH₂-CH₂)_{q}-[NHᵣ-(CH₂-CH₂)_{s]n}-NHₜ (II),
NH₂-CH₂-CH₂-CH₂-[NHᵣ-CH₂-CH₂-CH₂)ₛ]ₙ-NH₂ (III),
worin
n für 0 oder eine ganze Zahl von 1 bis 300,
p, q, s und t für 1 und 2, und
r für 0 und 1 steht,
oder das Amin der folgenden Formel (IV) entspricht: 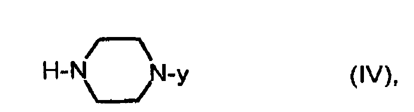 worin y für H, oder einen Aminoalkylrest steht.

2. Verfahren gemäß Anspruch 1, worin das Polyamin einer der folgenden Formeln (V) oder (VI) entspricht:
NH₂-CH₂-CH₂-[NH-CH₂-CH₂]ₙ-NH₂ (V)
NH₂-CH₂-CH₂-CH₂-[NH-CH₂-CH₂-CH₂]ₙ-NH₂ (VI)
wobei jeweils
n für 0 oder eine ganze Zahl von 1 bis 300 steht.

3. Verfahren gemäß einem der Ansprüche 1 oder 2, **dadurch gekennzeichnet, dass** das alkalische Medium Natronlauge ist.

4. Verfahren gemäß einem oder mehreren der Ansprüche 1 bis 3, **dadurch gekennzeichnet, dass** das alkalische Medium Natronlauge mit einer Konzentration von 30 bis 90 Gew.-% ist.

5. Verwendung von Aminen der Formeln (1) bis (IV) oder Polyaminen aus der Gruppe der Reaktionsprodukte von Dichlorethan mit Ammoniak und/oder anderen Aminen oder ein Polyamin aus der Gruppe der Reaktionsprodukte aus Ethylenoxid mit Ammoniak oder anderen Aminen als Bestandteil eines Korrosionsschutzmittels zum Schutz von metallischen Werkstoffen in einem alkalischen Medium mit pH Werten >13.

## Claims

1. Method of protecting metallic materials in a strongly alkaline medium by means of a corrosion inhibitor, **characterized in that** the corrosion inhibitor is added to an alkaline medium having a pH of > 13 and contains an amine having the formula (I) below 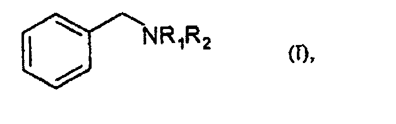 where
R₁ is a C₁-C₆-alkyl radical, H or a benzyl radical and
R₂ is a C₁-C₆-alkyl radical, H or a benzyl radical,
and where the benzyl radical may bear further substituents,
or the amine is a polyamine selected from the group consisting of the reaction products of dichloroethane with ammonia and/or other amines or a polyamine selected from the group consisting of the reaction products of ethylene oxide with ammonia or other amines
or the amine has one of the formulae (II) and (III) below:
Hₚ-N(CH₂-CH₂)_{q}-[NHᵣ-(CH₂-CH₂)ₛ]ₙ-NHₜ (II),
NH₂-CH₂-CH₂-CH₂-[NHᵣ-(CH₂-CH₂-CH₂)ₛ]ₙ-NH₂ (III),
where
n is 0 or an integer from 1 to 300,
p, q, s and t are each 1 or 2 and
r is 0 or 1,
or the amine has the formula (IV) below: 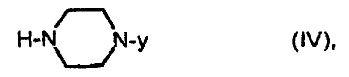 where y is H or an aminoalkyl radical.

2. Method according to Claim 1, wherein the polyamine has one of the formulae (V) and (VI) below:
NH₂-CH₂-CH₂-[NH-CH₂-CH₂]ₙ-NH₂ (V)
NH₂-CH₂-CH₂-CH₂-[NH-CH₂-CH₂-CH₂]ₙ-NH₂ (VI)
where in each case
n is 0 or an integer from 1 to 300.

3. Method according to either Claim 1 or 2, **characterized in that** the alkaline medium is aqueous sodium hydroxide solution.

4. Method according to one or more of Claims 1 to 3, **characterized in that** the alkaline medium is aqueous sodium hydroxide solution having a concentration of from 30 to 90% by weight.

5. Use of amines of the formulae (I) to (IV) or polyamines selected from the group consisting of the reaction products of dichloroethane with ammonia and/or other amines or a polyamine selected from the group consisting of the reaction products of ethylene oxide with ammonia or other amines as constituent of a corrosion inhibitor for protecting metallic materials in an alkaline medium having a pH of > 13.

## Revendications

1. Procédé de protection de matériaux métalliques dans un milieu fortement alcalin avec un agent anticorrosif, **caractérisé en ce que** l'agent anticorrosif est ajouté à un milieu alcalin ayant des valeurs de pH > 13 et contient une amine, l'amine présentant la formule (I) suivants : 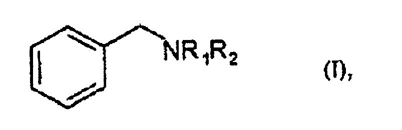 dans laquelle
R₁ représente un radical alkyle en C₁-C₆, H ou un radical benzyle et
R₂ représente un radical alkyle en C₁-C₆, H ou un radical benzyle,
et dans laquelle le radical benzyle peut éventuellement contenir des substituants supplémentaires,
ou l'amine étant une polyamine du groupe des produits de réaction du dichloroéthane avec l'ammoniac et/ou d'autres amines ou une polyamine du groupe des produits de réaction de l'oxyde d'éthylène avec l'ammoniac ou d'autres amines
ou l'amine présentant une des formules (II) ou (III) suivantes :
Hₚ-N(CH₂-CH₂)_{q}-[NHᵣ-(CH₂-CH₂)ₛ]ₙ-NHₜ (II),
NH₂-CH₂-CH₂-CH₂-[NHᵣ-(CH₂-CH₂-CH₂)ₛ]ₙ-NH₂ (III),
dans lesquelles
n représente 0 ou un nombre entier de 1 à 300,
p, q, s et t représentent 1 et 2, et
r représente 0 et 1,
ou l'amine présentant la formule (IV) suivants : 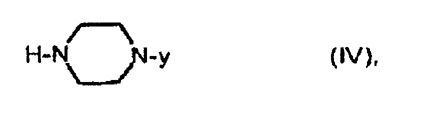 dans laquelle y représente H ou un radical aminoalkyle.

2. Procédé selon la revendication 1, dans lequel la polyamine présente une des formules (V) ou (VI) suivantes .
NH₂-CH₂-CH₂-[NH-CH₂-CH₂]ₙ-NH₂ (V)
NH₂-CH₂-CH₂-CH₂-[NH-CH₂-CH₂-CH₂]ₙ-NH₂ (VI),
dans lesquelles à chaque fois
n représente 0 ou un nombre entier de 1 à 300.

3. Procédé selon l'une quelconque des revendications 1 ou 2, **caractérisé en ce que** le milieu alcalin est la soude caustique.

4. Procédé selon une ou plusieurs des revendications 1 à 3, **caractérisé en ce que** le milieu alcalin est la soude caustique à une concentration de 30 à 90 % en poids.

5. Utilisation d'amines des formules (I) à (IV) ou de polyamines du groupe des produits de réaction du dichloroéthane avec l'ammoniac et/ou d'autres amines ou d'une polyamine du groupe des produits de réaction de l'oxyde d'éthylène avec l'ammoniac ou d'autres amines en tant que constituant d'un agent anticorrosif pour la protection de matériaux métalliques dans un milieu alcalin ayant des valeurs de pH > 13.
